Europäisches Patentamt

European Patent Office

Office européen des brevets

(11) Veröffentlichungsnummer: **0 201 709**
**A2**

# EUROPÄISCHE PATENTANMELDUNG

(21) Anmeldenummer: 86104592.0

(22) Anmeldetag: 04.04.86

(51) Int. Cl.⁴: **C 08 J 9/36**
**C 08 J 5/12, B 32 B 5/20**
**B 32 B 5/32**

(30) Priorität: 10.04.85 DE 3512780
26.02.86 DE 3606223

(43) Veröffentlichungstag der Anmeldung:
20.11.86 Patentblatt 86/47

(84) Benannte Vertragsstaaten:
AT BE CH DE FR GB IT LI NL SE

(71) Anmelder: METZELER SCHAUM GMBH
Donaustrasse 51
D-8940 Memmingen(DE)

(72) Erfinder: Kreisle, Manfred
Bodenseestrasse 31
D-8940 Memmingen(DE)

(72) Erfinder: Rossel, Heribert
Lerchenstrasse 6
D-8941 Buxheim(DE)

(72) Erfinder: Weiss, Gerhard
Schillerstrasse 16
D-8940 Memmingen(DE)

(74) Vertreter: Müller, Heinz-Gerd, Dipl.-Ing. et al,
BAYER AG Konzernverwaltung RP Patentabteilung
D-5090 Leverkusen 1, Bayerwerk(DE)

(54) Verfahren zur Herstellung eines Schaumstoff-Verbundes mit luftdurchlässigem Übergangsbereich.

(57) Zum Hinterschäumen einer Schaumstoffschicht, insbesondere eines mit einem Kaschierschaum versehenen textilen Flächengebildes, ist zur weitgehenden Erhaltung der Luftdurchlässigkeit und Vermeidung des Entstehens einer dichten Haut erfindungsgemäß vorgesehen, daß die zu hinterschäumende, offenzellige Schaumstoffschicht mit einem aktive Wasserstoffatome enthaltenden Stoff, insbesondere Triäthanolamin, behandelt und die Kennzahl des Hinterschäumschaumes in der Grenzphase herabgesetzt wird.

EP 0 201 709 A2

METZELER SCHAUM GMBH
Memmingen

München, den 27.3.1986
Unser Zeichen: MS 180 a P 85 EP

**0201709**

## Verfahren zur Herstellung eines Schaumstoff-Verbundes mit luftdurchlässigem Übergangsbereich

Die Erfindung betrifft neben dem Gegenstand ein Verfahren zur Herstellung eines Schaumstoff-Verbundes mit luftdurchlässigem Übergangsbereich, in dem ein vorgefertigter, offenzelliger Schaumstoff, insbesondere ein Polyurethan-Schaumstoff, vorzugsweise mit einseitiger Kaschierung, direkt mit einem Schaum aus Polyurethan, welcher Polyisocyanat, Polyol und ggf. weitere Hilfsstoffe enthält, hinterschäumt wird.

Bei der direkten Hinterschäumung einer vorhandenen Schaumstoffschicht tritt bei den bekannten Verfahrensweisen stets eine Verdichtung des Polyurethan-Hinterschäumschaumes in der Grenzschicht auf, so daß dadurch eine luftundurchlässige Sperrschicht entsteht.

Dies ist besonders nachteilig bei der Hinterschäumung von beispielsweise auf schaumflammkaschierten textilen Bezugsstoffen für Sitzpolster, insbesondere Kraftfahrzeugsitze. Hier soll nämlich eine möglichst hohe Luftdurchlässigkeit erhalten bleiben, die maßgebend für den Sitzkomfort ist, da damit ein guter Luftaustausch für den Feuchtigkeits- und Wärmetransport sichergestellt ist.

Der Erfindung liegt die Aufgabe zugrunde, durch Hinterschäumen eines offenzelligen, vorgefertigten und evtl. auf der Gegenseite mit textilem oder lederartigem Bezug kaschierten Schaumstoffes - vorzugsweise aus Polyurethan - mit einem offenzelligen Schaum aus Polyurethan einen Verbund zu finden, der neben hoher Festigkeit eine hinreichende Luftdurchlässigkeit für den Wärme- und Feuchtigkeitstransport, wie er beispielsweise bei Sitzen erforderlich ist, zuläßt, und der keine spürbare Verhärtung im Übergangsbereich aufweist.

Die Aufgabe wird erfindungsgemäß dadurch gelöst, daß vor dem Hinterschäumen dem vorgefertigen Schaumstoff eine Substanz mit gegenüber Isocyanat-Gruppen aktiven Wasserstoffatomen zwecks Herabsetzung der Kennzahlen im Übergangsbereich des Hinterschäumschaumes zugeführt wird.

Nach einer derartigen Vorbehandlung des Schaumstoffes tritt zwischen den Isocyanat-Gruppen des hinterschäumten Schaumes und den aktiven Wasserstoffatomen der Substanz eine Reaktion ein, die teilweise zur Kollabierung des Schaumes, besonders im Grenzbereich zum Schaumstoff, führt, wobei sich das Material an die Stege des zu hinterschäumenden, offenzelligen Schaumstoffes anlegt. Durch diese Maßnahme fehlen die sonst üblichen geschlossenen Häute an den Poren, die eine Durchlüftung behindern würden.

Der Vernetzungsgrad des Hinterschäumschaumes kann je nach Substanzmenge im Übergangsbereich gezielt reduziert werden, wobei die Kennzahl K 20 sein sollte. Die Kennzahl K gibt das Verhältnis der tatsächlichen Isocyanat-Menge x 100 zur stöchiometrischen Isocyanat-Menge an.

Weiter ist es vorteilhaft, um mit möglichst geringen Mengen an Substanzen auszukommen, zum Hinterschäumen vorzugsweise Polyurethane mit Isocyanat-Unterschuß von 0 bis 50 %, bezogen auf K = 100, einzusetzen.

Durch die erfindungsgemäßen Maßnahmen wird die Luftdurchlässigkeit des Schaumstoff-Verbundes wesentlich verbessert. Ein ungünstiger Festigkeitsabfall tritt im Übergangsbereich zwischen Schaumstoff und hinterschäumtem Schaum nicht auf, da das weniger vernetzte Material sich an den Stegen ansammelt, ohne daß dadurch sich die Flexibilität, wie sie für den Sitzkomfort erforderlich ist, merklich verschlechtert.

Als Stoffe zur Behandlung der hinterschäumenden Schaumstoffschicht werden zweckmäßigerweise Carboxyl-, Hydroxyl- und/oder amingruppenhaltige Verbindungen verwendet. Insbesondere können zur Anwendung kommen Essigsäure, Zitronensäure, Ammoniaklösung, Isopropanol, Spiritus, Ammoniumchloridlösungen, Harnstofflösung oder Glycerinlösung. Als besonders vorteilhaft haben sich Amine, insbesondere Triäthanolamin (TEA) in wässriger Lösung erwiesen.

Der Auftrag der Substanz kann vorzugsweise durch Streichen, Sprühen oder Transfercoating in wässriger oder nicht wässriger Lösung bzw. als Gemisch erfolgen. Auch ist es denkbar, den Behandlungsstoff als Paste aufzutragen oder den Schaumstoff in die Substanz einzutauchen. Die notwendige Temperatur hängt von der Viskosität ab, wobei normalerweise mit Raumtemperatur gearbeitet werden kann. Die Menge liegt zwischen 1 - 1000g/m$^2$, wobei Mengen zwischen 10 - 100 g/m$^2$, insbesondere 30 - 80 g/m$^2$, im allgemeinen für die Praxis hinreichende Luftdurchlässigkeiten ergeben.

Ein Schaumstoff-Verbund, hergestellt nach dem erfindungsgemäßen Verfahren, besitzt eine um mindestens 10 % verbesserte Luftdurchlässigkeit im Übergangsbereich gegenüber einem vergleichbaren, unbehandelten Schaumstoff-Ver-

bund.                                                        **0201709**

Der Vorteil des erfindungsgemäßen Verbundschaumes besteht darin, daß einerseits durch Vorfertigung eines Schaumes in Verbindung mit einem Bezugsstoff beliebige Formen, beispielsweise für Autositze, gefertigt werden können und andererseits durch Verhinderung einer Sperrschicht eine Luftdurchlässigkeiten von mehr als 30 Liter/min., insbesondere 50 Liter/min., vorhanden ist. Die Luftdurchlässigkeit wird über die Menge (Liter/Minute) gemessen, die durch eine 50 mm dicke Schicht aus Polyurethanschaum mit einer Fläche von 100 mm x 100 mm bei Beaufschlagung mit Luft unter Raumtemperatur und 10 mm WS hindurchtritt.

Anhand nachstehend erläuterter Versuchsergebnisse wird die Funktionsweise des erfindungsgemäßen Verfahrens näher erläutert.

Bei der Versuchsdurchführung wurde eine Probenform in der Größe 200 x 200 x 100 mm verwendet, auf deren Boden ein 15 mm starker offenzelliger, feinporiger Polyurethanschaumstoff, wie er üblicherweise als Kaschierschaum für Textilien verwendet wird, eingelegt wurde. Diese Schaumstoffschicht mit einer Fläche von 400 $cm^2$ wurde dann mit einem TEA-/Wasser-Gemisch im nachstehend angegebenen Verhältnis und einer Menge von 10 g behandelt und anschließend 30 Minuten bei 60°C getrocknet, so daß der verbleibende Wasseranteil unter 5 % lag. Danach wurde das Schaumstoff-Reaktionsgemisch für den Hinterschäumschaum eingebracht, die Probeform geschlossen und das aufgeschäumte Teil nach 5 Minuten entformt. Nach einer Nachreaktionszeit von 10 bis 20 Stunden wurde die Luftdurchlässigkeit ermittelt.

Bei den verschiedenen Versuchsreihen mit unterschied-

0201709

lichen TEA/Wasserverhältnissen wurden dabei Hinterschäum-schäume mit abnehmender Kennzahl eingebracht und untersucht.

In der nachstehend aufgeführten Tabelle sind jeweils die Kennzahlen der eingeschäumten Reaktionsgemische, das TEA/Wasserverhältnis sowie die anschließend ermittelte Luftdurchlässigkeit angegeben.

| Kennzahl | TEA/Wasser-verhältnis | Luftdurchlässig-keit 1/min |
|---|---|---|
| 100 | ohne | 22 |
| 100 | 50:50 | 66 |
| 100 | 20:80 | 54 |
| 90 | 50:50 | 89 |
| 90 | 20:80 | 51 |
| 80 | 50:50 | 128 |
| 80 | 20:80 | 76 |
| Kaschierschaum | | 150 |
| Hinterschäumschaum | | 200 |

In der Tabelle ist in der ersten Zeile die Luftdurchlässigkeit bei einem direkten Hinterschäumen ohne Behandlung der zu hinterschäumenden Oberfläche angegeben, die mit 22 1/min erheblich unter den Werten für die behandelten Schaumstoffschichten liegt.

Insgesamt kann aus der Tabelle abgelesen werden, daß die Luftdurchlässigkeit einerseits mit zunehmendem Anteil von Wasser, d.h. einer jeweils geringeren Menge von TEA, abnimmt, daß aber andererseits die Luftdurchlässigkeit ansteigt bei Hinterschäumschäumen mit einer Kennzahl unter 100.

Im Vergleich zu der ebenfalls angegebenen Luftdurchlässigkeit des eingesetzten Kaschierschaumes sowie des aufgebrachten Hinterschäumschaumes ergibt sich, daß durch die entsprechende Behandlung der Oberfläche des zu hinterschäumenden Schaumes noch eine hohe Luftdurchlässigkeit von mindestens knapp 50 % der zu hinterschäumenden Schaumstoffschicht erhalten bleibt.

Weitere Versuche haben ergeben, daß bei einer Behandlung mit TEA auch die Festigkeit und die Alterung in der Grenzphase voll ausreichend ist. Die Festigkeit kann aber noch dadurch erhöht werden, daß die Oberfläche der zu hinterschäumenden Schaumstoffschicht nur partiell behandelt wird. Das kann dadurch erfolgen, daß beispielsweise auf die Schaumstoffschicht ein Lochblech aufgelegt wird, so daß damit nur die freiliegenden Bereiche behandelt werden. Damit ergibt sich zwar in den unbehandelten Bereichen die bisher übliche Verdichtung und Hautbildung des Hinterschäumschaumes, die erzielte Luftdurchlässigkeit in den dazwischenliegenden behandelten Bereichen ist jedoch noch ausreichend, um dem Gesamtverbund insgesamt eine hinreichende Luftdurchlässigkeit zuzuerkennen.

Mit dem beschriebenen Verfahren ist es also auf sehr einfache Weise möglich, Schaumstoffschichten direkt zu hinterschäumen, wobei die Luftdurchlässigkeit auch in der Grenzschicht weitgehend erhalten bleibt.

METZELER SCHAUM GMBH   München, den 27.3.1986
Memmingen            Unser Zeichen: MS 180 a P 85 EP

Patentansprüche

1.      Verfahren zur Herstellung eines Schaumstoff-Verbundes mit luftdurchlässigem Übergangsbereich, in dem ein vorgefertigter, offenzelliger Schaumstoff, insbesondere ein Polyurethan-Schaumstoff, mit vorzugsweise einseitiger Kaschierung direkt mit einem Schaum aus Polyurethan, welcher Polyisocyanat, Polyol und ggf. weitere Hilfsstoffe enthält, hinterschäumt wird, dadurch gekennzeichnet, daß vor dem Hinterschäumen dem vorgefertigten Schaumstoff eine Substanz mit gegenüber Isocyanat-Gruppen aktiven Wasserstoffatomen zwecks Herabsetzung der Kennzahl im Übergangsbereich des Hinterschäumschaumes zugeführt wird.

2.      Verfahren nach Anspruch 1, dadurch gekennzeichnet, daß die Substanz Carboxyl-, Hydroxyl- und/oder amingruppenhaltige Verbindungen enthält.

3.      Verfahren nach Anspruch 2, dadurch gekennzeichnet, daß als Substanz Triäthanolamin in wässriger Lösung eingesetzt wird.

4.      Verfahren nach Ansprüchen 1 bis 3, dadurch gekennzeichnet, daß die Substanz in wässriger oder nichtwässriger Lösung und/oder als Gemisch, durch Sprühen, Streichen, Tauchen oder Transfercoating in einer Menge von 1 bis 1000 g/m$^2$ dem vorgefertigten Schaumstoff zugeführt wird.

0201709

5. Verfahren nach Anspruch 1 bis 3, dadurch gekennzeichnet, daß die Substanz in Pastenform in einer Menge von 1 bis 1000 g/m$^2$ aufgetragen wird.

6. Verfahren nach Ansprüchen 1 bis 5, dadurch gekennzeichnet, daß die Zuführung des Behandlungsstoffes durch Auflage eines Lochbleches nur in bestimmten Bereichen erfolgt.

7. Schaumstoff-Verbund zweier offenporiger Schäume, hergestellt mittels Hinterschäumen gemäß Verfahrensansprüche 1 bis 6, dadurch gekennzeichnet, daß der Schaumstoff-Verbund eine um mindestens 10 % verbesserte Luftdurchlässigkeit im Übergangsbereich gegenüber einem vergleichbaren unbehandelten Schaumstoffverbund besitzt.